# EUROPEAN PATENT SPECIFICATION

(11) **EP 1 627 016 B1**
(45) Date of publication and mention of the grant of the patent: **21.12.2016**
(21) Application number: 04733206.9
(22) Date of filing: 14.05.2004
(51) Int. Cl.: C08L 27/06, C08K 5/53, C08J 5/18, B44C 5/04, C08K 3/22

(54) **THE FLAME RETARDANT INTERIOR SHEET WITH LOW SMOKE EMISSION**
FLAMMWIDRIGE INNENRAUMPLATTE MIT GERINGER RAUCHENTWICKLUNG
FEUILLE INTERIEURE IGNIFUGE A FAIBLE EMISSION DE FUMEE

(30) Priority: 16.05.2003 KR 2003031126
(43) Date of publication of application: 22.02.2006
(73) Proprietor: LG Chem. Ltd., Seoul 150-010 (KR)
(72) Inventor: LEE, Min-Ho, Yangsan-si, Gyeongsangnam-do 626-755 (KR); LEE, Kang-Youp, Cheongju-si, Chungcheongbuk-do 361-302 (KR); CHA, Hyung-Min, Cheongju-si, Chungcheongbuk-do 361-271 (KR); CHO, Young-Ho, Pusan 617-010 (KR)
(74) Representative: Hoffmann Eitle
(86) International application number: PCT/KR2004/001142
(87) International publication number: WO 2004/101675

(56) References cited:
- WO-A1-96/25748
- JP-A- 02 064 142
- JP-A- 07 145 283
- JP-A- 2001 110 236
- US-A- 4 098 748
- US-A- 4 409 275
- US-A- 4 670 494
- US-A- 4 892 683
- US-A- 5 439 742
- RAWLE, A.: "Basic principles of particle-size analysis", SURFACE COATINGS INTERNATIONAL PART A: COATINGS JOURNAL, vol. 86, no. 2, 1 February 2003 (2003-02-01), - 28 February 2003 (2003-02-28), pages 58-65, ISSN: 1476-4857

## Description

### Technical Field

The present invention relates to a low smoke and flame retardant composition for a decorative sheet which generates less combustion gases and has excellent flame retardancy, and a decorative sheet comprising at least one layer containing the composition.

### Background Art

A large amount of smoke including toxic gases generated during a fire results in great loss of life. To ensure safety against fire, there exists a strong need for decorative sheets with excellent flame retardancy by using flame retardant plasticizers, flame retardants and smoke suppressants.

In this connection, much research has been conducted on the flame retardancy and fire resistance of decorative sheets. In addition, a number of studies to decrease the amount of smoke generated upon combustion are being actively undertaken.

Several low smoke and flame retardant resin compositions for decorative sheets are disclosed in Japanese Patent Laid-open Nos. 1997-048083, 1.998-287781, 2000-086810 and 2000-129263, and U.S. Patent Nos. 4,544,695, 6,316,118 and 6,355,277.

According to these patent publications, large amounts of hydroxides or phosphorus-based flame retardant as auxiliary flame retardants are used to improve the flame retardancy of the sheets. The addition of hydroxides delays the time of smoke generation and slows the rate of smoke generation because of the endothermic reaction of water elimination during thermal decomposition. In addition, a smoke suppressant, such as zinc borate, is used as an auxiliary to improve low smoke generation properties.
WO 96/25748 describes a flame retardant and smoke suppressant electrical insulating composition for an electrical conductor which comprises an inner layer and an outer layer. A preferred formulation for the outer layer halogenated material comprises inter alia a homopolymer PVC resin, antimony trioxide, barium/zinc stabilizer complex, magnesium hydroxide molybdate complex, permanent plasticizer, alkyl aryl phosphate ester and aluminum trihydrate. US 4,892,683 defines a flame retardant low smoke PVC-based thermoplastic composition for use in wire insulation and cable jacketing compositions include poly(vinyl chloride), an additional chlorinated resin, tribasic lead sulfate, a molybdenum-containing smoke suppressing material, alumina trihydrate, a brominated aromatic ester plasticizer, at least one additional plasticizer and at least one lubricant.

US 4,098,748 is related to a flame-resistant and smoke suppressed plasticized polyvinyl chloride polymer containing specified amounts of a plasticizer comprising an ester-type primary plasticizer in combination with a controlled amount of a chlorinated paraffin or organic phosphate ester secondary plasticizer and an effective amount of a flame retardant and smoke suppressant agent comprising inorganic molybdenum compounds.

### Disclosure of Invention

### Technical Problem

However, if hydroxides are added in large amounts in order to obtain low smoke generation properties, they cause poor mechanical properties and processability in the manufacture of decorative sheets.

With the aim of solving these drawbacks, a metal hydride whose surface is treated with a silicon coupling agent or processing aid, is often used. However, there is a problem that large amounts of incomplete combustion gases upon combustion are generated.

As a result of testing prior art flame retardant materials by the flaming procedure described in the ASTM E 662 and ISO 5659 standard test methods, the smoke density did not come up to the standard value and the combustion was continued, resulting in an increase in the amount of smoke generation. Thus, the prior arts have many technical limitations and problems in decreasing the amount of smoke generation in decorative sheets.

In order to solve the aforementioned problems, flame retardants must have the following characteristics: high compatibility with soft polyvinyl chloride (PVC) resins , flame retardant effects without causing deterioration in physical properties, constant stability against light without causing discoloration of raw materials, excellent resistance to aging and hydrolysis, continued flame retardant effects in the range of from a temperature lower than thermal decomposition temperature of base polymers to the thermal decomposition temperature, no corrosion, good heat resistance, no odor and toxicity, and less generation of smoke and toxic gases upon combustion

### Technical Solution

Therefore, the present invention has been made in view of the above problems associated with smoke generation of decorative sheets, and it is an object of the present invention to provide a soft PVC sheet composition which is excellent in processability and mechanical properties, e.g., tensile strength and elongation.

### Advantageous Effects

It is another object of the present invention to provide a decorative sheet having improved low smoke generation properties, particularly, a low smoke density as measured in accordance with the ISO 5659 standard test method. The present inventors have earnestly and intensively conducted research to improve low smoke generation properties. As a result, the present inventors have found that when a phthalate-based plasticizer negatively affecting smoke density is replaced with a phosphate-based plasticizer, a low smoke and flame retardant composition having excellent low smoke generation properties, processability and mechanical properties can be prepared. The present inventors have also found that when a combination of magnesium hydroxide
and aluminum hydroxide and a molybdenum -based compound is used as a smoke suppressant instead of the hydroxide alone, a low smoke and flame retardant composition can be prepared. The present invention has been accomplished on the basis of these findings.

### Best Mode

In order to accomplish the above objects of the present invention, there is provided a low smoke and flame retardant composition comprising 100 parts by weight of a PVC resin as a base resin, 5-30 parts by weight of a phosphorus (phosphate)-based plasticizer (e.g., isodecyl diphenyl phosphate), a flame retardant and a smoke suppressant which is as defined in claim 1.

As the flame retardant, a mixture of 2-20 parts by weight of aluminum hydroxide and 2-20 parts by weight of magnesium hydroxide is used. As the smoke suppressant, 0.5∼10 parts by weight of a molybdenum compound having an average particle size of 2-5 microns is used.

DOP (di-2-ethylhexylphthalate) as a conventional plasticizer used to prepare a soft PVC sheet composition generates large amounts of gasses. In the present invention, a phosphorus-based flame retardant plasticizer is used instead of DOP. The phosphorus-based plasticizer has the same physical properties as DOP, improved low smoke generation properties and excellent flame retardant effects. A preferred phosphorus-based flame retardant plasticizer is isodecyl diphenyl phosphate. The phosphorus-based flame retardant plasticizer is present in an amount of 5-30 parts by weight, based on 100 parts by weight of the PVC resin. Within the content range, since the composition of the present invention has improved low smoke generation properties and a plasticization rate substantially similar to DOP, it can exhibit superior processability and excellent mechanical properties.

Non-halogen phosphates are divided into four types depending on their chemical structure. Triaryl phosphates, such as Reophos , TPP (triphenyl phosphate) and TCP (tricresyl phosphate), are widely used as general -purpose flame retardants. Trialkyl phosphates are mainly used as plasticizers or lubricants. Alkylaryl phosphates have an aryl group and a long-chain alkyl group in their molecular structure. Examples of alkylaryl phosphates include ODP (2-ethylhexyl phosphate), IDDPP (isodecyl diphenyl phosphate) and the like.

The presence of the alkyl and aryl groups in a single molecular structure is important in terms of low smoke generation. When the organic plasticizer is combined with an inorganic flame retardant, the low smoke generation properties are further improved.

For the purpose of delaying the initial combustion time of the base resin and the rate of smoke generation and further improving the mechanical properties and processability of the composition according to the present invention, a metal hydroxide namely magnesium hydroxide and aluminum hydroxide whose surface is treated with stearic acid is used in an amount of 4-40 parts by weight, based on 100 parts by weight of the PVC resin.

When the amount of the metal hydroxide is less than 4 parts by weight, sufficient flame retardant effects and delaying effects on the rate of smoke generation cannot be achieved. Meanwhile, when the amount of the metal hydroxide exceeds 40 parts by weight, the mechanical properties of the composition are deteriorated.

On the other hand, since the use of the metal hydroxide alone cannot satisfy the criteria of flame retardant performance defined in the Korean Fire Law (KOFEIS 1001), Sb₂O₃ (antimony trioxide) effective in improving self- extinguishing properties and blocking fire propagation is essentially added. In the present invention, Sb₂O₃ is added in an amount of 2-6 parts by weight, based on 100 parts by weight of the PVC resin.

However, since the amount of smoke to be generated increases in proportion to the content of Sb₂O₃, Sb₂O₃ is preferably added in such a limited amount that the fire propagation is effectively blocked.

When Sb₂O₃ is used in an amount of less than 2 parts by weight, blocking effects on fire propagation are unsatisfactory. On the other hand, when Sb₂O₃ is used in an amount exceeding 6 parts by weight, the smoke generation is increased.

Since the self- extinguishing properties of the metal hydroxide have a limitation in decreasing the amount of smoke generation, 0.5∼10 parts by weight of the molybdenum compound, based on 100 parts of the PVC resin, having an average particle size of 2-5 microns as a smoke suppressant is combined with the metal hydroxide, as described above. When the amount of the molybdenum compound added is less than 0.5 parts by weight, low smoke generation properties are not attainable. On the other hand, when the amount of the molybdenum compound is more than 10 parts by weight, the physical properties of the composition are deteriorated.

For the purpose of improving heat resistance and preventing discoloration caused by heat during processing, the composition of the present invention further comprises 2-5 parts by weight of a barium zinc-based thermal stabilizer, based on 100 parts by weight of the PVC resin. The addition of the thermal stabilizer can improve poor heat resistance of the phosphorus-based flame retardant plasticizer (e.g., IDDPP).

The low smoke and flame retardant composition of the present invention can be applied to a decorative sheet having a general laminate structure.

Therefore, in accordance with another aspect of the present invention, there is provided a low smoke and flame retardant decorative sheet comprising a transparent film, a printed layer, a colored film and a pressure-sensitive adhesive layer laminated in this order from the top wherein at least one layer selected from these layers contains the low smoke and flame retardant composition. Preferably, the colored film contains the low smoke and flame retardant composition.

The present invention will now be described in more detail with reference to the following examples. However, these examples are not to be construed as limiting the scope of the invention.

### Examples

Low smoke and flame retardant compositions of the present invention (Examples 1-3) and compositions of Comparative Examples 1 and 2 were prepared so as to have the compositions indicated in Table 1 below, and the smoke density and flame retardancy of the compositions were evaluated. The results are summarized in Table 2 below.

### <Manufacture of low smoke and flame retardant decorative sheets and smoke generation test>

Each of low smoke and flame retardant compositions of Examples 1-3 and Comparative Examples 1 and 2 was mixed in a roll mill at 185 °C for 10 minutes to obtain test pieces. The smoke density and flame retardancy of the compositions were evaluated using the test pieces as follows.
1) Smoke density was measured by the ASTM E662 and ISO5659 standard test methods (Heat Flux: 2.5 W/cm²).
   Detailed test conditions were set in accordance with the flaming procedure, and 0.1mm thick, 75mm wide and 75mm long test pieces were used.
2) Heat resistance: Test pieces were taken out from the roll mill at 185°C at intervals of 10 minutes over 60 minutes, and then their discoloration was determined.

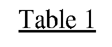

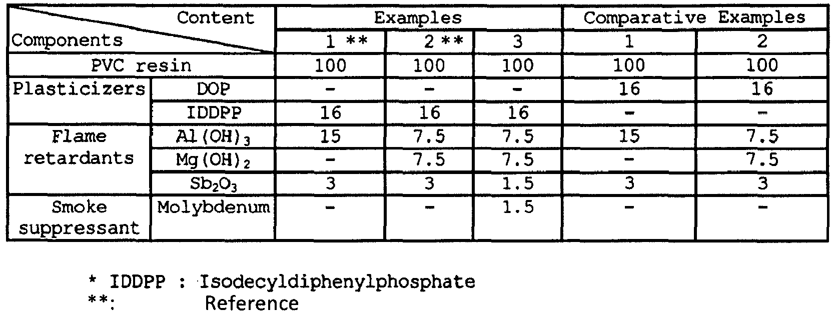

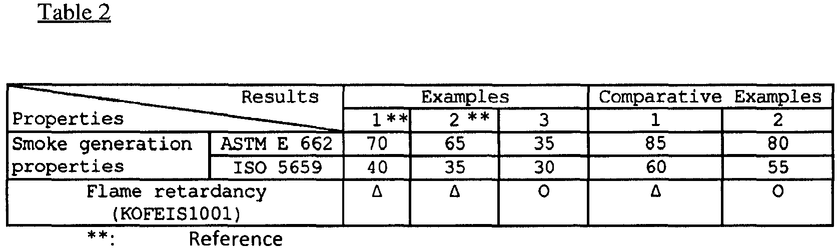

The compositions of Comparative Examples 1 and 2 had excellent flame retardancy and heat resistance during processing, but they had a relatively high smoke density. The smoke density of the compositions of Comparative Examples 1 and 2 exceeded the standard range of flame retardant performance defined in the Korean Fire Law (KOFEIS 1001) that will be revised in the near future.

In the case of a 0.1mm thick test piece, a preferred standard range is 60 or less in the ASTM E 662 standard test method, and 50 or less in the ISO 5659 standard test method.

In particular, since the low smoke and flame retardant composition of Example 3 (Reference) comprises IDDPP as a phosphorus-based plasticizer, and a molybdenum compound and a metal hydroxide as auxiliary smoke suppressants, it exhibited excellent low smoke generation properties and at the same time improved flame retardancy.

### Industrial Applicability

As apparent from the foregoing, since the low smoke and flame retardant composition for a decorative sheet according to the present invention comprises a phosphorus-based plasticizer instead of DOP as a conventional plasticizer and a combination of molybdenum compound and a metal hydroxide, it exhibits markedly decreased smoke density upon combustion. In addition, the low smoke and flame retardant composition for a decorative sheet according to the present invention has heat resistance equal to or greater than conventional compositions, and thus has excellent processability.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A low smoke and flame retardant composition for a decorative sheet, comprising:
100 parts by weight of a PVC resin;
5 - 30 parts by weight of a phosphorus-based plasticizer instead of di-2-ethylhexylphthalate;
a mixture of 2 - 20 parts by weight of aluminum hydroxide and 2 - 20 parts by weight of magnesium hydroxide as a flame retardant; and
0.5 - 10 parts by weight of a molybdenum compound having an average particle size of 2 - 5 µm as a smoke suppressant.

2. The composition according to claim 1, wherein the phosphorus-based plasticizer is isodecyl diphenyl phosphate.

3. The composition according to claim 1, wherein the composition comprises:
100 parts by weight of a PVC resin;
5 - 30 parts by weight of isodecyl diphenyl phosphate; and
2 - 6 parts by weight of Sb₂O₃.

4. The composition according to claim 3, further comprising 2 - 5 parts by weight of a barium zinc-based thermal stabilizer, based on 100 parts by weight of the PVC resin.

5. A low smoke and flame retardant decorative sheet comprising at least one layer containing a composition according to any one of claims 1 to 4.

6. The decorative sheet according to claim 5, wherein the decorative sheet comprises a transparent film, a printed layer, a colored film and a pressure-sensitive adhesive layer laminated in this order from the top.

7. The decorative sheet according to claim 6, wherein the colored film contains a composition according to any one of claims 1 to 4.

## Patentansprüche

1. Flammwidrige Zusammensetzung mit geringer Rauchentwicklung für eine dekorative Lage, enthaltend
100 Gew.-Teile eines PVC-Harzes,
5 - 30 Gew.-Teile eines Plastifizierers auf Phosphorbasis anstelle von Di-2-ethylhexylphthalat,
eine Mischung aus 2 - 20 Gew.-Teilen Aluminiumhydroxid und 2 - 20 Gew.-Teilen Magnesiumhydroxid als flammwidriges Mittel und
0,5 - 10 Gew.-Teilen einer Molybdänverbindung mit einer durchschnittlichen Teilchengröße von 2 - 5 *µ*m als Rauchunterdrückungsmittel.

2. Zusammensetzung nach Anspruch 1, worin der Plastifizierer auf Phosphorbasis Isodecyldiphenylphosphat ist.

3. Zusammensetzung nach Anspruch 1, worin die Zusammensetzung enthält:
100 Gew.-Teile eines PVC-Harzes,
5 - 30 Gew.-Teile Isodecyldiphenylphosphat und
2 - 6 Gew.-Teile Sb₂O₃.

4. Zusammensetzung nach Anspruch 3, weiterhin enthaltend 2 - 5 Gew.-Teile eines thermischen Stabilisators auf Barium-Zink-Basis, bezogen auf 100 Gew.-Teile des PVC-Harzes.

5. Flammwidrige dekorative Lage mit geringer Rauchentwicklung, enthaltend zumindest eine Schicht, umfassend eine Zusammensetzung nach einem der Ansprüche 1 bis 4.

6. Dekorative Lage nach Anspruch 5, worin die dekorative Lage einen transparenten Film, eine gedruckte Schicht, einen gefärbten Film und eine selbstklebende Adhäsivschicht enthält, die in dieser Reihenfolge von der oberen Seite laminiert sind.

7. Dekorative Lage nach Anspruch 6, worin der gefärbte Film eine Zusammensetzung nach einem der Ansprüche 1 bis 4 enthält.

## Revendications

1. Composition ignifuge à faible émission de fumée destinée à une feuille décorative, comprenant :
100 parties en poids d'une résine PVC ;
5 à 30 parties en poids d'un plastifiant à base de phosphore au lieu de phtalate de di-2-éthylhexyle ;
un mélange de 2 à 20 parties en poids d'hydroxyde d'aluminium et de 2 à 20 parties en poids d'hydroxyde de magnésium comme ignifugeant ; et
0,5 à 10 parties en poids d'un composé de molybdène, comme inhibiteur de fumée, présentant une taille moyenne de particules de 2 à 5 micromètres.

2. Composition selon la revendication 1, dans laquelle le plastifiant à base de phosphore est le phosphate d'isodécyldiphényle.

3. Composition selon la revendication 1, dans laquelle la composition comprend :
100 parties en poids d'une résine PVC ;
5 à 30 parties en poids de phosphate d'isodécyldiphényle ; et
2 à 6 parties en poids de Sb₂O₃.

4. Composition selon la revendication 3, comprenant en outre 2 à 5 parties en poids d'un stabilisant thermique à base de baryum-zinc sur la base de 100 parties en poids de la résine PVC.

5. Feuille décorative ignifuge à faible émission de fumée comprenant au moins une couche contenant une composition selon l'une quelconque des revendications 1 à 4.

6. Feuille décorative selon la revendication 5, dans laquelle la feuille décorative comprend un film transparent, une couche imprimée, un film coloré et une couche d'adhésif autocollant stratifiés dans cet ordre depuis le sommet.

7. Feuille décorative selon la revendication 6, dans laquelle le film coloré contient une composition selon l'une quelconque des revendications 1 à 4.
